# EUROPÄISCHE PATENTSCHRIFT

(11) **EP 3 446 381 B1**
(45) Veröffentlichungstag und Bekanntmachung des Hinweises auf die Patenterteilung: **26.02.2020**
(21) Anmeldenummer: 17723250.1
(22) Anmeldetag: 06.04.2017
(51) Int. Cl.: H02B 1/06, H02B 1/04, H02B 1/056, H02B 1/20

(54) **ANORDNUNG FÜR DIE BERÜHRUNGSSICHERE KONTAKTIERUNG EINES STROMSAMMELSCHIENENSYSTEMS**
ASSEMBLY FOR THE TOUCH-PROOF CONTACTING OF A BUS BAR SYSTEM
AGENCEMENT PERMETTANT LA CONNEXION SANS RISQUE DE CONTACT D'UN SYSTÈME DE RAILS COLLECTEURS DE COURANT

(30) Priorität: 22.04.2016 DE 102016107565
(43) Veröffentlichungstag der Anmeldung: 27.02.2019
(73) Patentinhaber: Rittal GmbH & Co. KG, 35745 Herborn (DE)
(72) Erfinder: SCHELL, Michael, 35687 Dillenburg-Niederscheid (DE); BASTIAN, Andreas, 35690 Dillenburg (DE); JUNGBAUER, Ann-Sylvia, 35633 Lahnau (DE)
(74) Vertreter: Angerhausen, Christoph
(86) Internationale Anmeldenummer: PCT/DE2017/100275
(87) Internationale Veröffentlichungsnummer: WO 2017/182033

(56) Entgegenhaltungen:
- EP-A1- 0 407 241
- EP-A1- 2 538 507
- EP-A1- 2 863 496
- EP-A2- 0 753 916
- EP-A2- 0 859 438
- DE-U1-202005 013 446

## Beschreibung

Die Erfindung geht aus von einer Anordnung für die berührungssichere Kontaktierung eines Stromsammelschienensystems mit mehreren Stromsammelschienen, wobei die Anordnung ein Berührungsschutzgehäuse aus elektrisch isolierendem Material mit Aufnahme für Stromsammelschienen aufweist. Eine derartige Anordnung ist aus der EP 2 863 496 A1 bekannt. Eine ähnliche Anordnung beschreibt die EP 2 461 440 A2.

Weiterhin ist eine Anordnung gemäß des Oberbegriffs des Anspruchs 1 aus der EP 0 753 916 A2 bekannt. Die EP 2 538 507 A1 offenbart außerdem einen mehrpoligen Sammelschienenadapter mit hintergreifenden Haltefüßen und DE 20 2005 013 446 U1 offenbart eine mehrpolige Isolierabdeckung mit hintergreifenden Haltefüßen.

Die aus dem Stand der Technik bekannten Anordnungen haben den Nachteil, dass sie aufwendig sowohl in der Herstellung als auch in der Handhabung sind. Es ist daher die Aufgabe der Erfindung, eine Anordnung der eingangs genannten Art derart weiter zu entwickeln, dass sie zugleich kostengünstig in der Herstellung ist, einfach an einem bestehenden Stromsammelschienensystem montiert werden kann und darüber hinaus die einfache Kontaktierung der Stromsammelschienen des Stromsammelschienensystems erlaubt.

Diese Aufgabe wird durch eine Anordnung nach Anspruchs 1 gelöst. Die abhängigen Ansprüche betreffen jeweils vorteilhafte Ausführungsformen der Erfindung.

Demgemäß wird eine Anordnung für die berührungssichere Kontaktierung eines Stromsammelschienensystems vorgeschlagen, bei der das Berührungsschutzgehäuse eine die Aufnahmen aufweisende Basis sowie eine die Aufnahmen verschließende und wahlweise von der Basis lösbare Abdeckung mit einer Montageseite aufweist, wobei die Anordnung weiterhin einen mehrpoligen Sammelschienenadapter für die elektrische Kontaktierung der Stromsammelschienen aufweist, der mit einem Adaptergehäuse auf der Montageseite montiert ist und dazu mit jeweils mindestens einem Kontaktelement für jede elektrisch zu kontaktierende Sammelschiene durch die Abdeckung hindurch tritt.

Dabei tritt der Sammelschienenadapter mit die Stromschienen durchgreifenden Haltefüßen durch die Abdeckung hindurch tritt, wozu die Abdeckung eine ebene Abdeckplatte mit einer der Anzahl der zu kontaktierenden Stromsammelschienen entsprechenden Anzahl Reihen aus regelmäßig beabstandeten Durchlassschlitzen aufweist, wobei die Haltefüße als Klingen ausgebildet sind, mit denen sie durch die Durchlassschlitze in der Abdeckung hindurchtreten.

Im Vergleich zu den aus dem Stand der Technik bekannten Anordnungen ist es mit dem mehrpoligen Sammelschienenadapter möglich, über die Montage dieses auf der Montageseite des Berührungsschutzgehäuses in einem einzigen Arbeitsschritt die Kontaktierung sämtlicher Sammelschienen zu erreichen. Dazu kann für die Kontaktierung eines mehrpoligen Stromsammelschienensystems der Sammelschienenadapter an der Montageseite auf das Berührungsschutzgehäuse aufgesetzt werden, so dass mehrere Haltefüße des Sammelschienenadapters jeweils eine der Stromsammelschienen hintergreifen können und ein jeweils einer der zu kontaktierenden Sammelschienen zugeordnetes Kontaktelement die jeweilige Sammelschiene kontaktiert.

Das Adaptergehäuse kann eine Adapteraufnahme zur Montage einer elektronischen Komponente in dem Adaptergehäuse aufweisen. Die Adapteraufnahme kann dazu eingerichtet sein, eine lösbare oder unlösbare kraftschlüssige Verbindung zwischen sich und einer zu kontaktierenden elektronischen Komponente auszubilden. Diese kann etwa eine Schraub- oder eine Rastverbindung sein. Die Adapteraufnahme kann weiterhin für eine elektronische Kontaktierung zwischen der elektronischen Komponente und dem mindestens einen Kontaktelement eingerichtet sein. Diese kann durch elektrische Kontakte in der Adapteraufnahme bereitgestellt sein.

Wenn das Berührungsschutzgehäuse mit seiner Montageseite vertikal ausgerichtet ist, beispielsweise wenn die Stromsammelschienen des Stromsammelschienensystems in einer vertikalen Ebene übereinander angeordnet sind, so ist es möglich, dass der Sammelschienenadapter über seine Haltefüße auf die in horizontaler Richtung verlaufenden Stromsammelschienen eingehakt bzw. eingehängt wird.

Die Haltefüße können im Wesentlichen eine L-Form aufweisen, mit einem sich senkrecht zu einer Montageseite des Adaptergehäuses erstreckenden Steckabschnitt, mit dem sie durch die Montageseite hindurch treten, und mit einem dazu abgewinkelten Abschnitt an dem von dem Sammelschienenadapter abgewandten Ende des jeweiligen Haltefußes, mit dem sie die Sammelschienen hintergreifen.

Das Adaptergehäuse muss nicht zwingend auf der Montageseite aufliegen. Um eine gute Kontaktierung zwischen Kontaktelement und Sammelschiene zu erreichen, können die Haltefüße und die Kontaktelemente an gegenüber liegenden Seiten einer Sammelschiene angreifen, wobei das Kontaktelement und/oder der Haltefuß dazu eingerichtet ist, in Richtung des jeweils anderen der beiden verstellt zu werden. Die Verstellung kann durch eine Federvorspannung einer der Komponenten oder durch eine Gewindeverstellung erreicht werden, wie sie beispielsweise aus der EP 2 863 496 A1 bekannt ist. Dies kann jedoch dazu führen, dass zwischen einer Montageseite des Adaptergehäuses und der dieser gegenüber stehenden Montageseite des Adaptergehäuses ein Spalt ausgebildet ist, der die Montageseiten voneinander beabstandet.

Um zugleich die zuverlässige Halterung des Sammelschienenadapter auf dem Sammelschienensystem sowie die zuverlässige Kontaktierung der mindestens einen Sammelschiene zu gewährleisten, können die Haltefüße und Kontaktelemente an gegenüber liegenden Seiten einer Sammelschiene angreifen, wobei das Kontaktelement und/oder der Haltefuß dazu eingerichtet ist, in Richtung des jeweils anderen der beiden Komponenten verstellt zu werden.

Um eine möglichst ortsvariable Montage der Sammelschienenadapter auf dem Berührungsschutzgehäuse zu ermöglichen, kann die Abdeckung eine Montageseite aufweisen, die eine sich über die gesamte Basis erstreckende und plane Montageebene für mehrpolige Sammelschienenadapter bildet. Die Abdeckung kann einteilig oder mehrteilig ausgebildet sein. Wenn sie mehrteilig ausgebildet ist, kann sie für die Anreihung vorbereitet sein, so dass bei mehreren aneinander gereihten Abdeckungen oder Teilabdeckung wieder eine Montageseite mit einer sich über die gesamte Abdeckung erstreckende und plane Auflageebene erhalten wird.

Die Basis des Berührungsschutzgehäuses kann mehrteilig ausgebildet sein. Insbesondere kann die Basis mindestens ein Unterteil aufweisen, mit dem die Abdeckung lösbar verbunden ist und in dem die Aufnahmen für Stromsammelschienen als in Richtung senkrecht zu der Montageseite offene und in Stromsammelschienenlängsrichtung durchlässige Ausnehmungen ausgebildet sind. Die Ausnehmungen sind bei mit dem mindestens einen Unterteil verbundener Abdeckung in Richtung senkrecht zu der Montageseite von der Abdeckung verschlossen. Die Abdeckung kann über eine Scharnierverbindung mit den Unterteilen verbunden sein. An einer der Scharnierverbindung gegenüber liegenden Seite der Abdeckung kann die Abdeckung mit den Unterteilen kraftschlüssig, jedoch lösbar, verbunden sein. Dazu kann die Abdeckung mit den Unterteilen beispielsweise verschraubt sein.

Das Berührungsschutzgehäuse, zumindest jedoch die Abdeckung, kann aus einem elektrischen Isolator mit einer für typische Anwendungen erforderlichen elektrischen Durchschlagsfestigkeit ausgebildet sein. Das Berührungsschutzgehäuse bzw. dessen Komponenten, insbesondere die Unterteile und die Abdeckung, können Spritzgussformteile sein.

Die Basis kann mindestens zwei voneinander getrennte und/oder über mindestens einen Distanzsteg unter einem Abstand miteinander verbundene Unterteile aufweisen, die für die Aufnahme jeder Sammelschiene in Stromsammelschienenlängsrichtung fluchtende Ausnehmungen aufweisen. Die Distanzstege können lösbar mit den Unterteilen verbunden sein, beispielsweise über einen lösbaren Verbinder, etwa eine Schwalbenschwanzverbindung. Die Distanzstege können so bemessen sein, dass die Unterteile bei einem Abstand angeordnet sind, bei dem korrespondierende Befestigungsmittel zur Befestigung der Abdeckung auf den Unterteilen zusammenfallen, insbesondere fluchten, beispielsweise korrespondierende Durchlässe und Gewindeaufnahmen zur Verschraubung der Abdeckung auf den Unterteilen. Die Unterteile können mit den Distanzstegen über ihre gegenüber liegenden Längsseiten miteinander verbunden sein. Die gegenüber liegenden Längsseiten können dabei jeweils einen lösbaren Verbinder, insbesondere einen Steckverbinder, etwa einen Schwalbenschwanzverbinder, aufweisen, über die der Distanzsteg an den gegenüber liegenden Längsseiten jeweils festgelegt ist.

In die Ausnehmungen können Schienendickenausgleichselemente über die in Richtung senkrecht zu der Montageseite offene Seite der Ausnehmungen eingesetzt sein. Auf diese Weise ist es möglich, das Berührungsschutzgehäuse bedarfsweise für die Verwendung bei unterschiedlichen Sammelschienenquerschnittsgeometrien zu adaptieren. Die Schienendickenausgleichselemente können über eine sich in Richtung senkrecht zu der Montageseite erstreckende Nut-Feder-Verbindung in der jeweiligen Aufnahme in Stromsammelschienenlängsrichtung festgelegt sein.

Um die Positionierung der Abdeckung in Bezug auf die Basis zu vereinfachen, kann vorgesehen sein, dass die Unterteile oder deren Schienendickenausgleichselemente mindestens einen Vorsprung aufweisen, der in einem von einer Vielzahl Durchlassschlitze in der Abdeckung, über die die Kontaktfüße durch die Abdeckung wahlweise hindurchtreten können, formschlüssig aufgenommen ist, so dass die Abdeckung in Bezug auf die Unterteile eine vorgegebene Position einnimmt, wenn sie auf die Unterteile aufgesetzt ist.

Die Abdeckung ist erfindungsgemäß eine ebene Abdeckplatte, mit einer der Anzahl der zu kontaktierenden Sammelschienen ansprechenden Anzahl Reihen aus regelmäßig beabstandeten Durchlassschlitzen für die Kontaktfüße. Dazu kann die Abdeckung eine Mehrzahl perforierter Abschnitte für den Durchtritt des Haltefußes und des Kontaktelements sowie eine Mehrzahl massiver Abschnitte aufweisen, wobei zwischen zwei benachbarten perforierten Abschnitten jeweils ein massiver Abschnitt ausgebildet ist und die perforierten Abschnitte eine Vielzahl der durch parallele Trennstege voneinander beabstandeten Durchlassschlitze aufweisen. Die Trennstege können an ihren gegenüber liegenden Enden in jeweils einen der massiven Abschnitte münden.

Die massiven und die perforierten Abschnitte können sich jeweils über die gesamte Abmessung der Abdeckung in Längsrichtung der Sammelschienen erstrecken, so dass mehrere Abdeckungen in Längsrichtung unter Einhaltung eines ununterbrochenen Rasters mit festem Rasterabstand der Trennstege aneinander gereiht werden können.

Weiterhin können die Unterteile bzw. die Schienendickenausgleichselemente mit den Durchlassschlitzen in der Abdeckung fluchtende und sich in Richtung senkrecht zu der Montageseite erstreckende Steckschlitze aufweisen, über die der Sammelschienenadapter die Stromsammelschiene mit seinen Haltefüßen hintergreifen kann, wenn der Sammelschienenadapter im Bereich eines der Unterteile auf die Montageseite aufgesetzt ist. Die Steckschlitze können aus einer Mehrzahl parallel beabstandeter Trennwände gebildet sein.

Die Haltefüße sind erfindungsgemäß als Klingen ausgebildet mit denen sie durch die Durchlassschlitze in der Abdeckung hindurch treten. Diese können in Längsrichtung der zu kontaktierenden Sammelschienen wesentlich schmaler als in einer Richtung senkrecht dazu und zu der Montageebene. Dadurch wird erreicht, dass das die Durchlassschlitze in der Abdeckung entsprechend schmal gehalten werden können und das Rastermaß der Durchlassschlitze ebenso entsprechend gering gehalten kann. Dadurch wird eine besonders hohe Variabilität für die Montage des Sammelschienenadapters auf der Montageseite erreicht.

Weitere Einzelheiten der Erfindung werden anhand der nachstehenden Figuren erläutert. Dabei zeigt:
- Figur 1: eine perspektivische Ansicht einer Ausführungsform der erfindungsgemäßen Anordnung mit Blick auf die Montageseite des Berührungsschutzgehäuses;
- Figur 2: eine Rückansicht der Ausführungsform gemäß Figur 1;
- Figur 3: eine perspektivische Ansicht auf die Montageseite des Berührungsschutzgehäuses einer weiteren Ausführungsform der Erfindung, und
- Figur 4: eine perspektivische Ansicht auf die Montageseite eines beispielhaften Sammelschienenadapters.

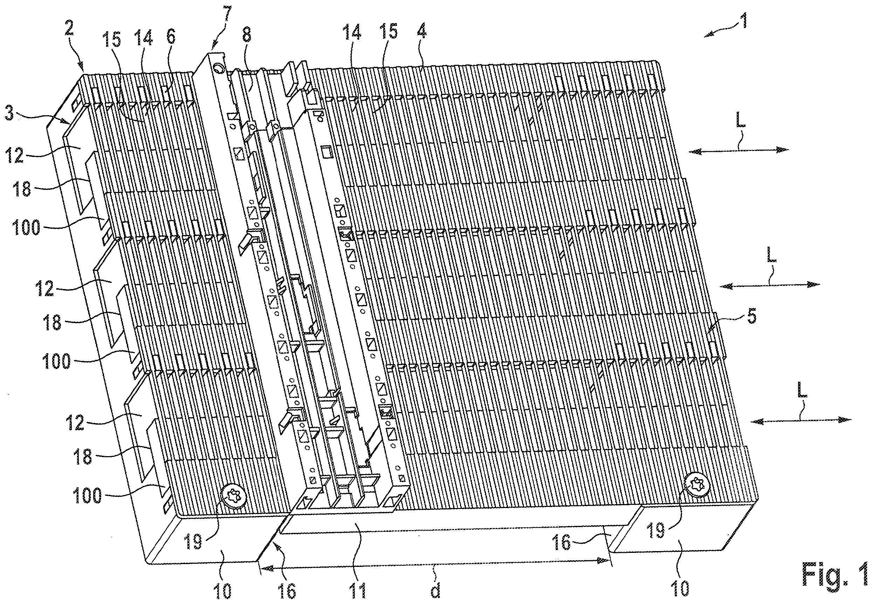

Die in Figur 1 gezeigte Anordnung 1 für die berührungssichere Kontaktierung eines Stromsammelschienensystems besteht im Wesentlichen aus einem Berührungsschutzgehäuse 2 mit einem darauf aufgesetzten, dreipoligen Sammelschienenadapter 7. Zur Veranschaulichung sind weiterhin drei in dem Berührungsschutzgehäuse 2 aufgenommene Sammelschienen 100 gezeigt. Die Sammelschienen 100 erstrecken sich parallel und unter einem Anstand zueinander in ihrer Längsrichtung L durch das Berührungsschutzgehäuse 2 hindurch.

Das Berührungsschutzgehäuse 2 setzt sich im Wesentlichen aus zwei über Distanzstege 11 unter einem Abstand d miteinander verbundenen Unterteilen 10, die mit den Stegen 11 die Basis bilden, und einer diese einteilig miteinander verbindenden Abdeckung 4 zusammen. Diese Komponenten sind als Spritzgussformteile aus einem elektrischen Isolatormaterial geeigneter elektrischer Durchschlagfestigkeit ausgebildet. Die Abdeckung 4 ist lösbar an den Unterteilen 10 festgelegt. Dazu ist sie an einer in der Darstellung oberen Längskante der Abdeckung 4 parallel zu der Längsrichtung L an den Unterteilen 10 scharnierend eingehängt und an der gegenüber liegenden, in der Darstellung unteren Längskante mit Gewindeschrauben 19 an den Unterteilen 10 verschraubt. Die Unterteile 10 sind an ihren gegenüber liegenden Längsseiten über den Distanzsteg 11 unter dem Abstand d miteinander verbunden.

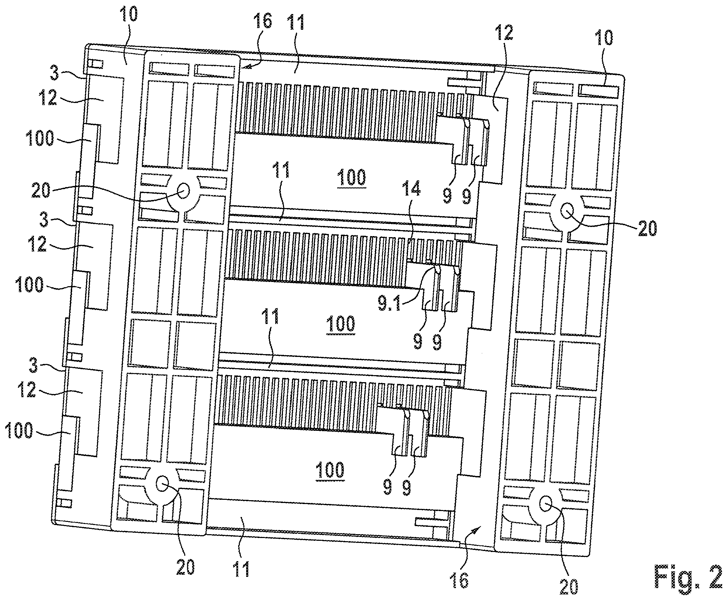

Die Abdeckung 4 bildet eine ebene Montageseite 5, über die das Adaptergehäuse 8 in Längsrichtung L variabel auf den Berührungsschutz aufgesetzt werden kann. Die Trennstege 15, welche in Längsrichtung L aneinander grenzende Durchlassschlitze 14 voneinander trennen, können dünn ausgebildet sein, da sie keine Belastungen aufnehmen. So wird eine feine Rasterung und damit eine hochvariable Anordnung des Sammelschienenadapters 7 auf der Montageseite 5 erreicht. Für die Kontaktierung jeder Sammelschiene 100 ist eine sich in Längsrichtung L erstreckende Reihe paralleler Durchlassschlitze 14 vorgesehen. Die lichte Öffnung der Durchlassschlitze 14 überlappt nur teilweise mit den jeweils zugeordneten Sammelschienen 100. Dadurch wird erreicht, dass der Sammelschienenadapter 7 über seine L-förmigen Haltefüße 9 (siehe Figur 2) zunächst entlang des oberen Anschlags der Durchlassschlitze 14 auf die Abdeckung 4 aufgesetzt werden kann, wobei er mit den Haltefüßen 9 durch die Abdeckung 4 hindurch taucht, um in einer darauf folgenden, vertikalen Schiebebewegung des Sammelschienenadapters 7 senkrecht zu der Längsrichtung L und parallel zur Montageseite 5 die freien Enden 9.1 der Haltefüße 9 (siehe Figur 2) des Sammelschienenadapters 7 derart in Bezug auf die jeweilige Sammelschiene 100 anzuordnen, dass die Sammelschiene 100 von dem freien Ende 9.1 des jeweiligen Kontaktfußes 9 hintergriffen wird. Die Figur 2 zeigt, dass die lichte Öffnung der Durchlassschlitze 14, welche von den Sammelschienen 100 nicht überdeckt wird, im Wesentlichen gerade der Abmessung der freien Enden 9.1 der Haltefüße 9 in der Längsrichtung des Adaptergehäuses 8 des Sammelschienenadapters 7 entspricht.

Die Figuren 1 und 2 lassen ebenfalls erkennen, dass in die Aufnahmen 3 Schienendickenausgleichselemente 12 eingesetzt sind, deren Unteraufnahme 18 gerade so bemessen ist, dass die jeweilige Sammelschiene 100 zwischen dem Schienendickenausgleichselement 12 und der Abdeckung 4 im Wesentlichen formschlüssig aufgenommen ist.

Die Darstellung gemäß Figur 2 zeigt weiterhin, dass die Unterteile 10 jeweils Durchgangsbohrungen 20 aufweisen, über die das Berührungsschutzgehäuse 2 im Innern eines Schaltschranks, beispielsweise an einer Montageplatte, festgelegt werden kann. Die Rückansicht gemäß Figur 2 veranschaulicht, dass die beiden als separate Bauteile ausgebildeten Unterteile 10 über vier Distanzstege 11 miteinander verbunden sind. Die Verbindung zwischen den Distanzstegen 11 und den Unterteilen 10 kann lösbar oder unlösbar ausgebildet sein. Es ist auch denkbar, die Unterteile 10 und die Distanzstege 11 einteilig auszubilden, beispielsweise als ein einteiliges Spritzgussformteil. Schließlich weisen die beiden äußeren Distanzstege 11 eine mit den Stirnseiten der Unterteile 10 fluchtende Seitenwand auf, welche die Stromsammelschienen seitlich verdecken.

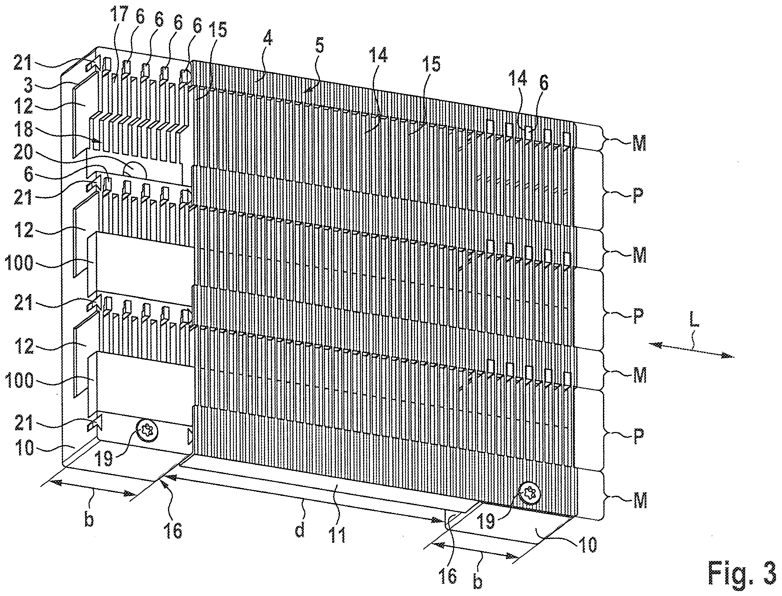

In Figur 3 ist eine Ausführungsform gezeigt, die für die Anreihung vorbereitet ist. Insbesondere kann eine weitere, der Abdeckung 4 entsprechende Abdeckung (nicht dargestellt) über das in der Darstellung linke Unterteil 10 an die dargestellte Abdeckung 4 unter Einhaltung des Rasters der Durchlassschlitze 14 angesetzt werden, so dass sich eine durchgängig einheitliche Montageebene 5 für die Montage von Sammelschienenadaptern 7 ergibt. Für die präzise Ausrichtung der Abdeckungen in Bezug auf die Unterteile 10 sind an den Unterteilen 10 Vorsprünge 6 ausgebildet, welche in entsprechende Ausnehmungen in der Abdeckung 4 eingreifen. Die Ausnehmungen in der Abdeckung 4 können beispielsweise Verlängerungen der Durchlassschlitze 14 sein, wie dies über das Zusammenwirken des Vorsprungs 6 mit dem verlängerten Durchlassschlitz 14 im Bereich des in der Darstellung rechten Unterteils 10 erkennbar ist.

Die Abdeckung 4 ist ein im Wesentlichen ebenes Bauteil nach Art einer Abdeckplatte. Die Abdeckung 4 setzt sich aus abwechselnden massiven Abschnitten M und perforierten Abschnitten P zusammen. Im Randbereich sind jeweils massive Abschnitte M angeordnet. Die perforierten Abschnitte P bestehen aus über parallele Trennstege 15 voneinander getrennte Durchlassschlitze 14. Die Trennstege 15 münden in ihren gegenüber liegenden Enden in jeweils einen massiven Abschnitt M.

Die Unterteile 10 bzw. deren Schienendickenausgleichselemente 12 weisen mit den Durchlassschlitzen 14 in der Abdeckung 4 fluchtende und sich in Richtung senkrecht zu der Montageseite 5 erstreckende Steckschlitze 17 auf, über die der Sammelschienenadapter 7 die Stromsammelschiene 100 mit seinen Haltefüßen 9 hintergreifen kann, wenn der Sammelschienenadapter 7 im Bereich eines der Unterteile 10 auf die Montageseite 5 aufgesetzt wird. Die Steckschlitze 17 sind über parallele Schottwände voneinander getrennt.

Die Figur 3 zeigt weiterhin, dass die Durchgangsbohrungen 20 (vergleiche Figur 2) in die Sammelschienenaufnahme 3 bzw. die Unteraufnahme 18 münden, so dass die Verschraubung des Unterteils 10 verdeckt ist, wenn eine Sammelschiene 100 in die Unteraufnahme 18 eingesetzt ist.

Für die Anreihung mehrerer Abdeckungen ist vorgesehen, dass die Abdeckung 4 in Längsrichtung L der Sammelschienen 100 eine Länge aufweist, die der Summe aus der Breite b eines Unterteils 10 und dem Abstand d benachbarter Unterteile 10, mithin der Länge der Distanzstege 11 (ohne Befestigungsmittel) entspricht. Für die Anreihung weisen die Unterteile 10 an ihren gegenüber liegenden Längsseiten 16 Steckverbinder 21 in Form einer Schwalbenschwanznut auf. Die Distanzstege 11 können an ihren gegenüber liegenden Enden dementsprechend als Befestigungsmittel jeweils eine komplementäre Kontur, also beispielsweise einen Schwalbenschwanzvorsprung aufweisen, über den sie in die Steckverbinder 21 eingreifen können.

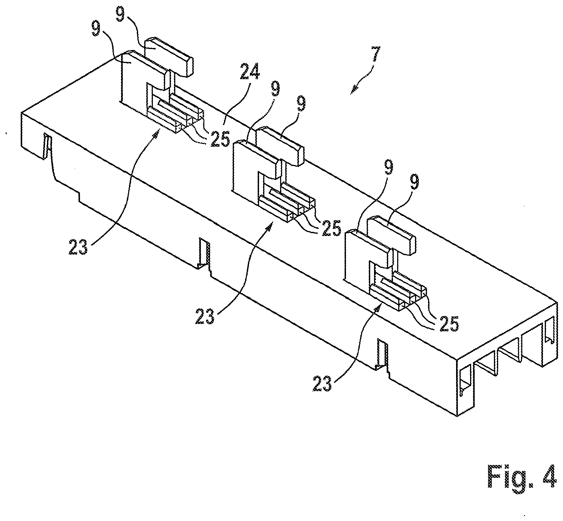

Die Figur 4 zeigt einen Blick auf die Montagseite 24 des Sammelschienenadapters 7. Dieser lässt die Kontaktelemente 23 des Adapters 7 für die elektrische Kontaktierung dieses an den Sammelschienen eines Sammelschienensystem erkennen. Die Kontaktelemente 23 sind als Kontaktplatten mit vorstehenden Kontaktrippen 25 ausgebildet, wie es aus der EP 2 863 496 A1 bekannt ist. Mit den Kontaktrippen 25 treten die Kontaktplatten durch die Durchlassschlitze 14 (vergleiche Figur 1) hindurch, um ihre jeweils zugeordnete Sammelschiene elektrische zu kontaktieren. Die Kontaktelemente 23 können über einen Gewindetrieb oder dergleichen in Richtung senkrecht zu der Montageseite 5 der Abdeckung 4 relativ zu der Montageseite 24 des Sammelschienenadapters 7 verstellt werden, wobei auch der Abstand zwischen dem Kontaktelement 23, bzw. den freien Enden der Kontaktrippen 25 und dem jeweiligen Haltefuß 9 verändert wird, um einerseits den Adapter 7 an der Sammelschienenanordnung festzulegen und andererseits die Sammelschienenanordnung zuverlässig zu kontaktieren.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Anordnung
- 2: Berührungsschutzgehäuse
- 3: Aufnahme
- 4: Abdeckung
- 5: Montageseite der Abdeckung
- 6: Vorsprung
- 7: Sammelschienenadapter
- 8: Adaptergehäuse
- 9: Haltefuß
- 9.1: freies Ende
- 10: Unterteil
- 11: Distanzsteg
- 12: Schienendickenausgleichselement
- 13: Verbindung
- 14: Durchlassschlitz
- 15: Trennsteg
- 16: Längsseite
- 17: Steckschlitz
- 18: Unteraufnahme
- 19: Gewindeschraube
- 20: Durchgangsbohrung
- 21: Steckverbinder
- 22: Adapteraufnahme
- 23: Kontaktelement
- 24: Montageseite des Sammelschienenadapters
- 25: Kontaktrippen
- 100: Stromsammelschiene
- b: Breite
- d: Abstand
- L: Stromsammelschienenlängsrichtung
- M: massiver Abschnitt
- P: perforierter Abschnitt

## Patentansprüche

1. Anordnung (1) für die berührungssichere Kontaktierung eines Stromsammelschienensystems mit mehreren Stromsammelschienen, wobei die Anordnung (1) ein Berührungsschutzgehäuse (2) aus elektrisch isolierendem Material mit Aufnahmen (3) für Stromsammelschienen (100) aufweist, das eine die Aufnahmen (3) aufweisende Basis (10, 11) sowie eine die Aufnahmen (3) verschließende und wahlweise von der Basis (10, 11) lösbare Abdeckung (4) mit einer Montageseite (5) aufweist, wobei die Anordnung (1) weiterhin einen mehrpoligen Sammelschienenadapter (7) für die elektrische Kontaktierung der Stromsammelschienen (100) aufweist, der mit einem Adaptergehäuse (8) auf der Montageseite (5) montiert ist und dazu mit jeweils mindestens einem Kontaktelement (23) für jede elektrisch zu kontaktierende Sammelschiene (100) durch die Abdeckung (4) hindurch tritt, **dadurch gekennzeichnet, dass** der Sammelschienenadapter (7) mit Haltefüßen (9) durch die Abdeckung (4) hindurch tritt, welche dazu ausgelegt sind die Stromsammelschienen (100) zu hintergreifen, wozu die Abdeckung (4) eine ebene Abdeckplatte mit einer der Anzahl der zu kontaktierenden Stromsammelschienen (100) entsprechenden Anzahl Reihen aus regelmäßig beabstandeten Durchlassschlitzen (14) aufweist, wobei die Haltefüße (9) als Klingen ausgebildet sind, mit denen sie durch die Durchlassschlitze (14) in der Abdeckung (4) hindurchtreten.

2. Anordnung (1) nach Anspruch 1, bei der das Adaptergehäuse (8) eine Adapteraufnahme (22) zur Montage einer elektronischen Komponente in dem Adaptergehäuse (8) aufweist.

3. Anordnung (1) nach Anspruch 1 oder 2, bei der die Haltefüße (9) und das mindestens eine Kontaktelemente (23) an gegenüber liegenden Seiten einer Sammelschiene (100) angreifen, wobei das Kontaktelement (23) und/oder die Haltefüße (9) dazu eingerichtet sind, in Richtung des jeweils anderen der beiden (9, 23) verstellt zu werden.

4. Anordnung (1) nach einem der vorangegangen Ansprüche, bei der die Montageseite (5) eine sich über die gesamte Basis (10, 11) erstreckende, insbesondere einteilige und plane Montageebene für mehrpolige Sammelschienenadapter (7) bildet.

5. Anordnung (1) nach einem der vorangegangen Ansprüche, bei der die Basis (10, 11) mindestens ein Unterteil (10) aufweist, mit dem die Abdeckung (4) lösbar verbunden ist und in dem die Aufnahmen (3) für Stromsammelschienen (100) als in Richtung senkrecht zu der Montageseite offene und in Stromsammelschienenlängsrichtung (L) durchlässige Ausnehmungen ausgebildet sind, wobei die Ausnehmungen bei mit dem mindestens einen Unterteil (10) verbundener Abdeckung (4) in Richtung senkrecht zu der Montageseite (5) von der Abdeckung (4) verschlossen sind.

6. Anordnung (1) nach Anspruch 5, bei der die Basis (10, 11) mindestens zwei voneinander getrennte oder über mindestens einen Distanzsteg (11) unter einem Abstand (d) miteinander verbundene Unterteile (10) aufweist, die für die Aufnahme jeder Sammelschiene (100) in Stromsammelschienenlängsrichtung (L) fluchtendende Ausnehmungen aufweisen.

7. Anordnung (1) nach Anspruch 5 oder 6, bei der in die Ausnehmungen Schienendickenausgleichselemente (12) über die in Richtung senkrecht zu der Montageseite (5) offene Seite der Ausnehmungen eingesetzt sind.

8. Anordnung (1) nach Anspruch 7, bei der die Schienendickenausgleichselemente (12) über eine sich in Richtung senkrecht zu der Montageseite (5) erstreckende Nut-Feder- Verbindung (13) in der jeweiligen Aufnahme (3) in Stromsammelschienenlängsrichtung (L) festgelegt sind.

9. Anordnung (1) nach Anspruch 7 oder 8, bei der die Schienendickenausgleichselemente (12) oder die Unterteile (10) mindestens einen Vorsprung (6) aufweisen, der in einem von einer Vielzahl der Durchlassschlitze (14) in der Abdeckung (4), über die die Kontaktfüße (9) durch die Abdeckung (4) wahlweise hindurchtreten können, formschlüssig aufgenommen ist, so dass die Abdeckung (4) in Bezug auf die Unterteile (10) eine vorgegebene Position einnimmt, wenn sie auf die Unterteile (10) aufgesetzt ist.

10. Anordnung (1) nach Anspruch 6, bei der die Unterteile (10) über mindestens einen Distanzsteg (11) unter dem Abstand (d) und über gegenüber liegende Längsseiten (16) miteinander verbunden sind, wobei die gegenüber liegenden Längsseiten (16) jeweils einen lösbaren Verbinder (21) aufweisen, über den der Distanzsteg (11) an den gegenüber liegenden Längsseiten (16) jeweils festgelegt ist.

11. Anordnung (1) nach einem der vorangegangen Ansprüche, bei der die Abdeckung (4) eine Mehrzahl perforierter Abschnitte (P) für den Durchtritt des Haltefußes (9) und des Kontaktelements (23) sowie eine Mehrzahl massiver Abschnitte (M) aufweist, wobei zwischen zwei benachbarten perforierten Abschnitten (P) jeweils ein massiver Abschnitt (M) ausgebildet ist und die perforierten Abschnitte (P) eine Vielzahl durch parallele Trennstege (15) voneinander beabstandete Durchlassschlitze (14) aufweisen, und wobei die Trennstege (15) an ihren gegenüber liegenden Enden in jeweils einen der massiven Abschnitte (M) münden.

12. Anordnung (1) nach Anspruch 11, bei der sich die massiven und perforierten Abschnitte (M, P) jeweils über die gesamte Abmessung der Abdeckung (4) in Längsrichtung (L) der Sammelschienen (100) erstrecken, so dass mehrere Abdeckungen (4) in Längsrichtung unter Einhaltung eines Rasterabstands der Trennstege (15) angereiht werden können.

13. Anordnung (1) nach Anspruch 11 oder 12, soweit sich diese auf einen der Ansprüche 7 bis 9 beziehen, bei der die Schienendickenausgleichelemente (12) mit den Durchlassschlitzen (14) in der Abdeckung (4) fluchtende und sich in Richtung senkrecht zu der Montageseite (5) erstreckende Steckschlitze (17) aufweist, über die der Sammelschienenadapter (7) die Stromsammelschiene (100) mit seinen Kontaktfüßen (9) hintergreifen kann, wenn der Sammelschienenadapter (7) im Bereich eines der Unterteile (10) auf die Montageseite (5) aufgesetzt ist.

## Claims

1. Arrangement (1) for touch-safe contacting of a busbar system with multiple busbars, wherein the arrangement (1) has a touch protection housing (2) made of electrically insulating material with receptacles (3) for busbars (100), which has a base (10, 11) having the receptacles (3) and a cover (4), which closes the receptacles (3) and is optionally detachable from the base (10, 11), the cover having an installation side (5), wherein the arrangement (1) has a multipole busbar adapter (7) for the electrical contacting of the busbars (100), which is installed with an adapter housing (8) on the installation side (5) and for this purpose passes through the cover (4) with at least one contact element (23) in each case for each busbar (100) to be electrically contacted, **characterized in that** the busbar adapter (7) passes through the cover (4) with retaining feet (9), which are configured to engage behind the busbars (100), for which purpose the cover (4) has a planar cover plate with a number of rows of regularly spaced-apart passage slots (14) corresponding to the number of busbars (100) to be contacted, wherein the retaining feet (9) are formed as blades, with which they pass through the passage slots (14) in the cover (4).

2. The arrangement (1) according to claim 1, in which the adapter housing (8) has an adapter receptacle (22) for installing an electronic component in the adapter housing (8).

3. The arrangement (1) according to claim 1 or 2, in which the retaining feet (9) and the at least one contact element (23) engage at opposite sides of a busbar (100), wherein the contact element (23) and/or the retaining feet (9) are configured to be adjusted in the direction of the respective other of the two (9, 23).

4. The arrangement (1) according to any one of the preceding claims, in which the installation side (5) forms an installation plane, in particular an integral and planar installation plane, extending over the entire base (10, 11) for multipole busbar adapters (7).

5. The arrangement (1) according to any one of the preceding claims, in which the base (10, 11) has at least one lower part (10), to which the cover (4) is detachably connected and in which the receptacles (3) for busbars (100) are formed as recesses which are open in the direction perpendicular to the installation side and are penetrable in the busbar longitudinal direction (L), wherein the recesses are closed by the cover (4) in the direction perpendicular to the installation side (5) when the cover (4) is connected to the at least one lower part (10).

6. The arrangement (1) according to claim 5, in which the base (10, 11) has at least two lower parts (10), which are separate from one another or are connected to one another via at least one spacer web (11) at a spacing (d), and which have recesses aligned in the busbar longitudinal direction (L) for receiving each busbar (100).

7. The arrangement (1) according to claim 5 or 6, in which bar thickness compensation elements (12) are inserted into the recesses via the side of the recesses open in the direction perpendicular to the installation side (5).

8. The arrangement (1) according to claim 7, in which the bar thickness compensation elements (12) are fixed in the respective receptacle (3) in the busbar longitudinal direction (L) via a tongue-and-groove connection (13) extending in the direction perpendicular to the installation side (5).

9. The arrangement (1) according to claim 7 or 8, in which the bar thickness compensation elements (12) or the lower parts (10) have at least one projection (6), which is received in a formfitting manner in one of a plurality of the passage slots (14) in the cover (4), via which the contact feet (9) can optionally pass through the cover (4), so that the cover (4) assumes a predefined position in relation to the lower part (10) when it is placed on the lower parts (10).

10. The arrangement (1) according to claim 6, in which the lower parts (10) are connected to one another via at least one spacer web (11) at the spacing (d) and via opposing longitudinal sides (16), wherein the opposing longitudinal sides (16) each have a detachable connector (21), via which the spacer web (11) is fixed in each case on the opposing longitudinal sides (16).

11. The arrangement (1) according to any one of the preceding claims, in which the cover (4) has a plurality of perforated sections (P) for the passage of the retaining foot (9) and the contact element (23) and a plurality of solid sections (M), wherein a solid section (M) is formed between each two adjacent perforated sections (P) and the perforated sections (P) have a plurality of passage slots (14) spaced apart from one another by parallel partition webs (15), and wherein the partition webs (15) each lead into one of the solid sections (M) at their opposing ends.

12. The arrangement (1) according to claim 11, in which the solid and perforated sections (M, P) each extend over the entire extension of the cover (4) in the longitudinal direction (L) of the busbars (100), so that multiple covers (4) can be juxtaposed in the longitudinal direction while maintaining a grid spacing of the partition webs (15).

13. The arrangement (1) according to claim 11 or 12, insofar as they refer to any one of claims 7 to 9, in which the bar thickness compensation elements (12) have plug slots (17) aligned with the passage slots (14) in the cover (4) and extending in the direction perpendicular to the installation side (5), via which the busbar adapter (7) can engage behind the busbar (100) with its contact feet (9) when the busbar adapter (7) is placed on the installation side (5) in the region of one of the lower parts (10).

## Revendications

1. Disposition (1) pour la mise en contact isolée d'un système de barre collectrice de courant avec plusieurs barres collectrices de courant, la disposition (1) comprenant un boîtier de protection anti-contact (2) constitué d'un matériau électriquement isolant avec des logements (3) pour des barres collectrices de courant (100), qui comprend une base (10, 11) comprenant les logements (3) ainsi qu'un couvercle (4) fermant les logements (3) et, au choix, amovible de la base (10, 11), avec un côté de montage (5), la disposition (1) comprenant en outre un adaptateur de barre collectrice multipolaire (7) pour la mise en contact électrique des barres collectrices de courant (100), qui est monté avec un boîtier d'adaptateur (8) sur le côté de montage (5) et qui, pour cela, traverse le couvercle (4), respectivement avec au moins un élément de contact (23) pour chaque barre collectrice (100) à contacter électriquement, **caractérisé en ce que** l'adaptateur de barre collectrice (7) traverse le couvercle (4) avec des pieds de maintien (9), qui sont conçus pour s'accrocher par-derrière aux barres collectrices (100), le couvercle (4) comprenant pour cela une plaque de recouvrement plane avec un nombre, correspondant au nombre de barres collectrices (100) à mettre en contact, de rangées de fentes de passage (14) disposées à intervalles réguliers, les pieds de maintien (9) étant conçus comme des lames avec lesquelles ils traversent les fentes de passage (14) dans le couvercle (4).

2. Disposition (1) selon la revendication 1, dans laquelle le boîtier d'adaptateur (8) comprend un logement d'adaptateur (22) pour le montage d'un composant électronique dans le boîtier d'adaptateur (8).

3. Disposition (1) selon la revendication 1 ou 2, dans laquelle les pieds de maintien (9) et l'au moins un élément de contact (23) s'accrochent à des côtés opposés d'une barre collectrice (100), l'élément de contact (23) et/ou les pieds de maintien (9) étant conçus pour être déplacés respectivement en direction de l'autre des deux (9, 23).

4. Disposition (1) selon l'une des revendications précédentes, dans laquelle le côté de montage (5) constitue un plan de montage s'étendant sur l'ensemble de la base (10, 11), plus particulièrement d'une seule pièce et plat, pour des adaptateurs de barres collectrices multipolaires (7).

5. Disposition (1) selon l'une des revendications précédentes, dans laquelle la base (10, 11) comprend au moins une partie inférieure (10), avec laquelle le couvercle (4) est relié de manière amovible et dans laquelle les logements (3) pour barres collectrices de courant (100) sont conçus comme des évidements ouverts dans une direction perpendiculaire au côté de montage et perméables dans la direction longitudinale des barres collectrices de courant (L), les évidements étant fermés lorsque le couvercle (4) relié avec l'au moins une partie inférieure (10) est perpendiculaire au côté de montage (5) du couvercle (4).

6. Disposition (1) selon la revendication 5, dans laquelle la base (10, 11) comprend au moins deux parties inférieures (10) séparées entre elles ou reliées entre elles par l'intermédiaire d'au moins une nervure d'écartement (11) à une distance (d), qui comprennent, pour le logement de chaque barre collectrice (100), des évidements alignés dans la direction longitudinale de la barre collectrice de courant (L).

7. Disposition (1) selon la revendication 5 ou 6, dans laquelle dans les évidements, sont insérés des éléments de compensation d'épaisseur de barres (12) sur le côté, ouvert dans la direction perpendiculaire au côté de montage (5), des évidements.

8. Disposition (1) selon la revendication 7, dans laquelle les éléments de compensation d'épaisseur de barres (12) sont fixés par l'intermédiaire d'une liaison à rainure et languette (13) s'étendant perpendiculairement au côté de montage (5), dans le logement (3) respectif dans la direction longitudinale de la barre collectrice de courant (L).

9. Disposition (1) selon la revendication 7 ou 8, dans laquelle les éléments de compensation d'épaisseur de barres (12) ou les parties inférieures (10) comprennent au moins une saillie (6) qui est logé par complémentarité de forme dans une parmi une pluralité de fentes de passage (14) dans le couvercle (4), par l'intermédiaire desquelles les pieds de contact (9) peuvent traverser le couvercle (4), de façon à ce que le couvercle (4) prenne, par rapport aux parties inférieures (10), une position prédéterminée lorsqu'il est posé sur les parties inférieures (10).

10. Disposition (1) selon la revendication 6, dans laquelle les parties inférieures (10) sont reliées entre elles par l'intermédiaire d'au moins une nervure d'écartement (11) à une distance (d) et par l'intermédiaire de côtés longitudinaux opposés (16), les côtés longitudinaux opposés (16) comprenant chacun un connecteur (21) par l'intermédiaire duquel la nervure d'écartement (11) est fixée aux côtés longitudinaux opposés (16).

11. Disposition (1) selon l'une des revendications précédentes, dans laquelle le couvercle (4) comprend une pluralité de portions perforées (P) pour le passage du pied de maintien (9) et de l'élément de contact (23) ainsi qu'une pluralité de portions massives (M), moyennant quoi, entre deux portions perforées (P) adjacentes, est formée une portion massive (M) et les portions perforées (P) comprennent une pluralité de fentes de passage (14) séparées par des nervures de séparation parallèles (15) et les nervures de séparation (15) débouchant chacune, au niveau de leurs extrémités opposées, dans une des portions massives (M).

12. Disposition (1) selon la revendication 11, dans laquelle les portions massives et perforées (M, P) s'étendant chacune sur toute la dimension du couvercle (4) dans la direction longitudinale (L) des barres collectrices (100), de façon à ce que plusieurs couvercles (4) puissent être alignés dans la direction longitudinale en respectant une distance de trame des nervures de séparation (15).

13. Disposition (1) selon la revendication 11 ou 12, dans la mesure où celles-ci se rapportent à une des revendications 7 à 9, dans laquelle les éléments de compensation d'épaisseur des barres (12) comprennent des fentes d'emboîtement (17), alignées avec les fentes de passage (14) dans le couvercle (4) et s'étendant perpendiculairement au côté de montage (5), par l'intermédiaire desquelles l'adaptateur de barre collectrice (7) peut s'accrocher par-derrière la barre collectrice (100) avec ses pieds de contact (9) lorsque l'adaptateur de barre collectrice (7) est posé au niveau d'une des parties inférieures (10) sur le côté de montage (5).
